# EUROPÄISCHE PATENTANMELDUNG

(11) **EP 3 217 158 A1**
(43) Veröffentlichungstag der Anmeldung: **13.09.2017**
(21) Anmeldenummer: 17000182.0
(22) Anmeldetag: 07.02.2017
(51) Int. Cl.: G01L 1/14

(54) **KAPAZITIVER FLÄCHENSENSOR**

(30) Priorität: 07.03.2016 DE 202016001419 U
(71) Anmelder: I.G. Bauerhin GmbH, 63584 Gründau (DE)
(72) Erfinder: Hein, Alexander, D- 36037 Fulda (DE); Flittner, Klaus, D-63867 Johannesberg (DE); Letzas, Volker, D-64839 Münster (DE)
(74) Vertreter: Grimm, Ekkehard

(57) **Zusammenfassung**

Kapazitiver Flächensensor für einen Fahrzeugsitz oder ein Lenkrad mit mindestens einer elektrisch isolierenden Trägerschicht und jeweils einer jeder Seite der Trägerschicht zugeordneten elektrisch leitfähigen Schicht. Die Trägerschicht ist eine dreidimensional verformbare Schicht und zumindest die eine elektrisch leitfähige Schicht bildet mit der Trägerschicht einen direkten Verbund.

## Beschreibung

Die vorliegende Erfindung betrifft einen kapazitiven Flächensensor gemäß dem Oberbegriff des Anspruchs 1.

Derartige kapazitive Flächensensoren werden beispielsweise in einen Fahrzeugsitz oder in ein Fahrzeuglenkrad integriert und bilden einen Teil einer Detektionseinrichtung, um beispielsweise den Belegungszustand eines Fahrzeugsitzes zu erfassen oder zu ermitteln, ob der Fahrer eines Fahrzeuges mit seiner Hand das Lenkrad berührt. In seinem Grundaufbau besitzt ein solcher Flächensensor mindestens eine elektrisch isolierende Trägerschicht; jeder Seite der Trägerschicht ist eine elektrisch leitfähige Schicht zugeordnet.

Die DE 10 2011 084 903 A1 beschreibt Sensorsysteme für Kraftfahrzeuge, auch zum Einbau in ein Lenkrad, das zusätzlich mit einer Heizeinrichtung beheizbar ist. Das beschriebene Lenkrad besitzt einen Lenkradkranz mit einem metallischen Skelett, das in eine Schaumschicht eingebettet ist. Diese Schaumschicht ist von einer Heizschicht umgeben, die ihrerseits durch eine elektrisch leitfähige Abschirmschicht eingehüllt ist. Die Abschirmschicht ist von einer Sensorschicht (kapazitives Sensorelement) umgeben. Auf der Außenseite ist der Lenkradkranz durch eine Lenkradhülle abgedeckt. Die Abschirmschicht kann einen mehrschichtigen Aufbau aufweisen, beispielsweise mit einer leitfähigen Schicht aus einem Drahtgewebe, einer darüber und einer darunter angeordneten Kleberschicht, einer Schaumschicht und einem Vlies. Auch ist vorgesehen, dass auf den beiden Seiten der Abschirmschicht ein Heizleiter eines Heizelements und ein Sensorleiter eines Sensorelements angeordnet sind. Durch Integration eines Vlieses in das Abschirmelement wird ein sicheres Vernähen der Drähte für den Heizleiter und den Sensorleiter erreicht.

Die DE 203 09 877 U1 ist auf ein Fahrzeugsicherheitssystem gerichtet, bei dem in dem Lenkradkranz eines Lenkrads wenigstens ein kapazitiver Sensor, vorzugsweise mehrere Sensoren, integriert sind. Über die Sensoren wird eine Veränderung eines elektrischen oder elektromagnetischen Felds erfasst. Die Sensoren liegen zwischen der Umhüllung, beispielsweise aus einer PUR-Umschäumung, eines Lenkradskeletts und einer den Lenkradkranz nach außen abschließenden Umhüllung in Form einer flexiblen Schaumschicht, einer Leder- oder Holzumhüllung. Es ist auch vorgesehen, dass die Sensoren durch wenigstens einen Abschnitt einer Lenkradheizung gebildet sind. Bei dem Einsatz von mehreren Sensoren können Rückschlüsse auf die Position des Oberkörpers oder des Kopfs eines Fahrers relativ zur Drehachse des Lenkrads gezogen werden. Die Sensoren können als eine flexible Matte mit darin aufgenommenen, langgestreckten, elektrischen Leitern aufgebaut sein. Auch kann ein solcher Sensor eine Vliesmatte mit eingeflochtenen Drähten enthalten.

Die DE 203 09 603 U1 beschreibt ein Lenkrad für ein Kraftfahrzeug. Das Lenkrad besitzt eine Sensoreinrichtung, die als kapazitives Sensorelement ausgeführt ist und im Bereich des Lenkradkranzes des Lenkrads angeordnet ist. Diese Sensoreinrichtung dient dazu, die Annäherung und/oder einen Kontakt des Lenkradkranzes durch eine Hand eines Fahrers durch Änderung der Kapazität des Sensorelements zu erfassen, um auch zu ermitteln, ob sich die Hand eines Fahrzeuginsassen vollständig oder nur teilweise an dem Lenkrad oder sich auch nur in der Nähe des Lenkrads befindet. Die Sensoreinrichtung befindet sich abgedeckt unterhalb eines Lenkradbezugs oder einer Lenkradverkleidung und ist aus einer Leiteranordnung aufgebaut, die beispielsweise durch einen um den Lenkradkranz herumgewickelten, elektrisch leitenden Draht ausgeführt ist. Diese Leiteranordnung wirkt als kapazitive Sensoreinrichtung. Die Signale werden durch eine Auswerteelektronik erfasst, die im zentralen Lenkradbereich angeordnet sein kann. Die Sensoreinrichtung kann auch in Form eines leitenden Kunststoffes, oder durch Flachbandleiter oder durch eine dreidimensionale, leitende Netzstruktur, aufgebaut werden.

Es ist ersichtlich, dass solche kapazitiven Flächensensoren sehr flexibel sein sollten, um sie den jeweiligen Gegebenheiten, beispielsweise an einem Lenkrad oder innerhalb eines Fahrzeugsitzes, anpassen zu können.

Der vorliegenden Erfindung liegt die Aufgabe zugrunde, einen kapazitiven Flächensensor anzugeben, der für Anwendungen in einem Fahrzeugsitz oder in einem Lenkrad, besonders gut geeignet ist, der kostengünstig herzustellen ist und sehr flexible Eigenschaften besitzt sowie bessere Schirmeigenschaften aufweist.

Gelöst wird diese Aufgabe durch einen kapazitiven Flächensensor gemäß Anspruch 1; bevorzugte Ausführungsform ergeben sich aus den abhängigen Ansprüchen.

Ein solcher kapazitiver Flächensensor für einen Fahrzeugsitz oder ein Lenkrad der mindestens eine elektrisch isolierende Trägerschicht und jeweils eine jeder Seite der Trägerschicht zugeordnete elektrisch leitfähige Schicht aufweist, ist dadurch gekennzeichnet, dass die Trägerschicht eine dreidimensional verformbare Schicht ist und dass zumindest die eine elektrisch leitfähige Schicht mit der Trägerschicht einen direkten Verbund bildet. Ein direkter Verbund zwischen der der Trägerschicht und der elektrisch leitfähigen Schicht bedeutet, dass die leitfähige Schicht ohne Verwendung eines Klebemittels, d. h. klebemittelfrei, auf der Trägerschicht aufgebracht ist. Hierdurch wird ein stabiler Verbund zwischen Trägerschicht und leitfähiger Schicht erreicht. Dadurch ist auch gewährleistet, dass sich die Trägerschicht und die leitfähige Schicht, oder die Trägerschicht und die beiden leitfähigen Schichten, wenn auf den beiden Seiten der Trägerschicht jeweils eine leitfähige Schicht direkt klebemittelfrei aufgebracht ist, während der Handhabung beim Einbau, aber auch während des Einsatzes in einem Fahrzeug, nicht gegeneinander verschieben können. Auch werden folglich keine Klebeschichten, beispielsweise in Form eines doppelseitigen Klebebands, zwischen der Trägerschicht und der leitfähigen Schicht benötigt.

In einer Ausführungsform wird die jeweilige leitfähige Schicht durch einen Lack gebildet, der auf die eine und/oder die andere Seitenfläche der Trägerschicht in der erforderlichen Dicke aufgebracht wird. Um einen solchen Lack aufzubringen, kann ein Sprühkopf eingesetzt werden.

Es ist aber auch vorgesehen, dass die leitfähige Schicht in Form einer Paste auf die entsprechende Seite der Trägerschicht aufgetragen wird; eine Paste ist insbesondere dann geeignet, wenn eine dickere Schicht aus leitfähigem Material auf der Trägerschicht erzeugt werden soll. Wenn sehr dünne leitfähige Schichten auf der Trägerschicht erzeugt werden sollen, wird die leitfähige Schicht als eine aufgedampfte Schicht aufgebracht. Das Erzeugen derart dünner Schichten ist unter anderem unter den Begrifflichkeiten Physical Vapor Depostion (PVD) oder Chemical Vapor Depostion (CVD), bekannt.

Abhängig davon, ob die leitfähige Schicht als Lack oder als Paste auf die Trägerschicht aufgebracht werden soll, und auch in Abhängigkeit davon, in welcher Dicke die leitfähige Schicht erforderlich ist, wird die jeweilige leitfähige Schicht durch einen pinselartigen Applikator, im Siebdruckverfahren oder durch Aufsprühen auf die entsprechende Fläche der Trägerschicht aufgetragen.

Es ist vorgesehen, dass die jeweilige leitfähige Schicht ein Edelmetall oder eine Edelmetalllegierung enthaltende Schicht ist. Besonders bevorzugt ist die jeweilige leitfähige Schicht eine im Wesentlichen Silber enthaltende Schicht. In dieser Schicht können beispielsweise die Silberpartikel in fein verteilter Form vorliegen. Für den Auftrag kann auch eine Suspension mit den darauf fein verteilten Partikeln aus leitfähigem Material verwendet werden.

Ein weiterer wesentlicher Aspekt ist derjenige, dass die Trägerschicht, bei der es sich um eine dreidimensional verformbare Schicht handelt, eine solche Oberfläche aufweist, dass sich die leitfähige Schicht gut damit verbindet. Die Oberfläche der Trägerschicht sollte im Wesentlichen glatt sein, und falls die Trägerschicht Poren aufweist, sollten diese Poren zumindest im Bereich der Oberfläche geschlossenporig sein. Als Material für die Trägerschicht ist Ethylen-Propylen-Dien-(Monomer)-Kautschuk (EPDM) vorgesehen, der alle Eigenschaften, die die Trägerschicht haben soll, mit sich bringt, wie beispielsweise gute elastische Eigenschaften und damit eine dreidimensionale Verformbarkeit, eine glatte Oberfläche, und dergleichen.

Alternativ kann die Trägerschicht aus Polyolefin, aus Elastomer, vorzugsweise aus Polyethylen, oder bevorzugt aus Silikon gebildet werden.

Des Weiteren kann alternativ die Trägerschicht auch aus der Gruppe der Polyester, vorzugsweise Polyethylenterephthalat (PET), oder aus der Gruppe der Polyimide, vorzugsweise Kapton® - welches ein Markenname der Firma DuPont ist, gebildet werden.

Eine Trägerschicht aus einem Schaumstoff, vorzugsweise aus einem Polyurethan-Schaumstoff, hat den Vorteil, dass eine dreidimensionale Verformbarkeit sehr gut gegeben ist, insbesondere dann, wenn dieser Schaumstoff ein geschlossenporiger Schaumstoff ist und dieser Schaumstoff eine sehr geringe Porengröße aufweist.

Es ist vorgesehen, dass die jeweilige elektrisch leitfähige Schicht eine Dicke im Bereich von 1 nm bis 100 µm, vorzugsweise eine Dicke von 10 nm bis 50 µm, noch bevorzugter eine Dicke von 10 nm bis 20 µm, aufweist; dies bedeutet, dass bevorzugt die leitfähige Schicht sehr dünn auf der entsprechenden Seite der Trägerschicht aufgebracht wird, um dadurch auch einen kompakten Aufbau eines kapazitiven Flächensensors zu erzielen.

Die jeweiligen elektrisch leitfähigen Schichten können im Wesentlichen identische Widerstandswerte aufweisen, müssen dies aber nicht. Die Widerstandswerte liegen dabei im Bereich von 0,06 Ohm/square bis 600 Ohm/square, vorzugsweise von 6 Ohm/square bis 60 Ohm/square, besonders bevorzugt im Bereich von 0,1 Ohm/square bis 10 Ohm/square, ganz besonders bevorzugt im Bereich von 0,1 Ohm/square bis 5 Ohm/square.

Für bestimmte Anwendungsbereiche besitzt die jeweilige elektrisch leitfähige Schicht einen kleineren Außenumfang als die Trägerschicht, so dass die leitfähige Schicht von dem Rand der Trägerschicht zumindest in Teilbereichen beabstandet ist In einer weiteren Ausführungsform kann die eine elektrisch leitfähige Schicht auf der einen Seite der Trägerschicht in ihren Außenabmessungen kleiner dimensioniert werden als die andere elektrisch leitfähige Schicht auf der anderen Seite der Trägerschicht. Auch kann zumindest eine der elektrisch leitfähigen Schichten nur Teilbereiche der Trägerschicht bedecken.

Unterschiedliche Größen der elektrisch leitfähigen Schichten dienen dazu, eine Abschirmwirkung zu verbessern und eine geringere Grundkapazität zu erhalten. Weiterhin wird dadurch ein möglicher Kurzschluss am Rande zwischen den beiden elektrisch leitfähigen Schichten vermieden.

Auch können Kurzschlüsse am Rande, zwischen den elektrisch leitfähigen Schichten und der dazwischen befindlichen Trägerschicht durch konisches oder kegelförmiges Stanzen der Außenkontur vermieden werden.

In einer weiteren möglichen Ausführungsform kann die eine elektrisch leitfähige Schicht auf der einen Seite der Trägerschicht in mehrere elektrisch zueinander isolierte Bereiche aufgeteilt sein. Die andere elektrisch leitfähige Schicht auf der anderen Seite der Trägerschicht kann dabei ebenfalls in mehrere Bereiche, die jeweils einem Bereich der anderen elektrisch leitfähigen Schicht zugeordnet sind, oder in nur einen Bereich aufgeteilt sein.

Die Aufteilung in mehrere Bereiche dient dazu, unterschiedliche Positionen der Hände des Fahrers erkennen und unterscheiden zu können, wie z.B. Berührung auf der linken oder rechten Seite des Lenkrads oder ein Umgreifen des Lenkrads. Analoges gilt für unterschiedliche Sitzpositionen auf einem Fahrzeugsitz.

Weitere Einzelheiten und Merkmale der Erfindung ergeben sich aus der nachfolgenden Beschreibung von Ausführungsbeispielen anhand der Zeichnungen. In den Zeichnungen zeigt:
- Figur 1: einen Querschnitt eines kapazitiven Flächensensors gemäß einer ersten Ausführungsform,
- Figur 2: einen Querschnitt eines kapazitiven Flächensensors gemäß einer zweiten Ausführungsform,
- Figur 3: einen schematischen Querschnitt durch den Schichtaufbau eines Lenkrads,
- Figur 4: den Schichtaufbau einer Heizungsschicht, wie sie in Figur 3 eingesetzt werden kann,
- Figur 5: einen weiteren Schichtaufbau einer Heizungsschicht, wie sie in Figur 3 eingesetzt werden kann,
- Figur 6: einen dritten Schichtaufbau einer Heizungsschicht, wie sie in Figur 3 eingesetzt werden kann, und
- Figuren 7a bis 7e: verschiedene Ausschnitte unterschiedlicher Strukturen für die elektrisch leitfähigen Schichten.

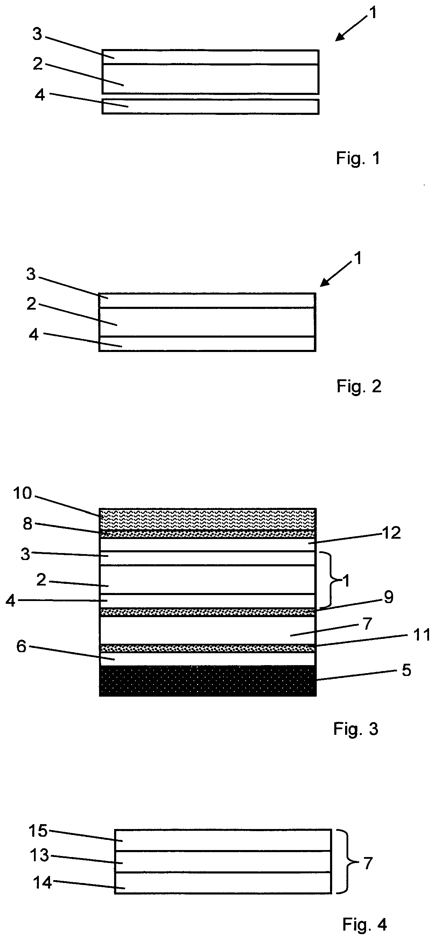

Ein kapazitiver Flächensensor gemäß der Erfindung, der für den Einsatz in einem Fahrzeugsitz oder in einem Lenkrad vorgesehen ist und allgemein mit dem Bezugszeichen 1 bezeichnet ist, umfasst, wie die Figur 1 zeigt, mindestens eine elektrisch isolierende Trägerschicht 2 und jeweils eine jeder Seite der Trägerschicht 2 zugeordnete elektrisch leitfähige Schicht 3, 4.

Die Trägerschicht 2 ist aus einem dünnen, dreidimensional verformbaren Material gebildet, vorzugsweise aus einem Ethylen-Propylen-Dien-(Monomer)-Kautschuk (EPDM), einem Polyolefin, einem Elastomer oder einem Schaumstoff, wobei Polyurethan-Schaumstoff bevorzugt ist. Falls die Trägerschicht 2 aus einem Schaumstoffmaterial besteht, sollte dieser ein geschlossenporiger Schaumstoff sein, oder zumindest ein solcher mit einer geringen Porengröße.

Die Trägerschicht 2 besitzt eine Dicke im Bereich von 0,01 mm bis 3 mm, wobei eine Dicke von 0,05 mm bis 2 mm oder von 0,07 mm bis 1,5 mm bevorzugt ist, um einen möglichst dünnen Schichtaufbau zu erreichen.

Zumindest auf der einen Seite der Trägerschicht 2 ist die dieser Seite zugeordnete elektrisch leitfähige Schicht 3 so aufgebracht, dass sie einen direkten, d.h. klebemittelfreien, Verbund mit der Trägerschicht 2 bildet. Um einen solchen direkten, klebemittelfreien Verbund zu erhalten, und zwar unter Vermeidung einer Klebemittelschicht, wird die leitfähige Schicht 3 als Lack oder als Paste aufgetragen. Auch ist vorgesehen, dass die leitfähige Schicht 3 auf die entsprechende Seite der Trägerschicht 2 mittels PVD- oder CVD-Verfahren aufgedampft wird.

Wie die Figur 1 zeigt, kann die leitfähige Schicht 4, die der anderen Flächenseite der Trägerschicht 2 zugeordnet ist, nur auf der Trägerschicht 2 aufgelegt werden (dies ist in Figur 1 dadurch angedeutet, dass zwischen der Trägerschicht 2 und der leitfähigen Schicht 4 ein Spalt belassen ist, der ansonsten nicht vorhanden ist).

Die Figur 2 zeigt einen kapazitiven Flächensensor 1, der in seinem Schichtaufbau demjenigen entspricht, der in Figur 1 gezeigt ist. Allerdings ist in Figur 2 auch die zweite Sensorschicht 4 eine Schicht, die in einem direkten Verbund mit der Trägerschicht 2, d.h. klebemittelfrei, aufgebracht ist, und zwar in einer Art und Weise, wie dies vorstehend anhand der leitfähigen Schicht 3 beschrieben ist. Die elektrisch leitfähige Schicht 3 und die elektrisch leitfähige Schicht 4 können dieselbe oder unterschiedliche Schichtdicken aufweisen, abhängig von dem Einsatzbereich des kapazitiven Flächensensors 1.

Für die jeweilige leitfähige Schicht 3 oder 4 ist eine Dicke von 1 nm bis 100 µm, vorzugsweise eine Dicke von 1 nm bis 50 µm, noch bevorzugter eine Dicke von 1 nm bis 20 µm, vorgesehen. Hierdurch ergibt sich ein Schichtaufbau für den kapazitiven Flächensensor 1 mit der Trägerschicht 2 und den beiden leitfähigen Schichten 3 und 4 mit einer sehr geringen Dicke, die, insbesondere abhängig von der Dicke der Trägerschicht 2, etwa 1 mm betragen kann.

Aufgrund der für die Trägerschicht 2 eingesetzten Materialien, wie sie vorstehend beschrieben sind, besitzt die Trägerschicht 2 eine gewisse Elastizität, so dass sie dreidimensional verformbar ist, um sie den Gegebenheiten anzupassen, beispielsweise dann, wenn der kapazitive Flächensensor um einen Lenkradkranz herumgelegt wird. Von besonderem Vorteil ist auch, dass die elektrisch leitfähigen Schichten 3 und/oder 4 klebemittelfrei in direktem Kontakt mit der Trägerschicht 2 stehen, und zwar in einer Art und Weise, insbesondere durch die Art der Aufbringung der leitfähigen Schichten 3, 4 auf die Trägerschicht 2, dass sie sich dem Dehnungsverhalten der Trägerschicht 2 anpassen.

Die leitfähige Schicht 3 und/oder 4 kann durch einen Lack, der mit einem Sprühkopf auf die Trägerschicht 2 aufgebracht wird, erzeugt werden mit dem Vorteil, dass die Schichtdicke der leitfähigen Schicht 3 oder 4 sehr genau eingestellt werden kann und die Schicht auch in Unebenheiten, beispielsweise Poren, auf der Oberfläche der Trägerschicht 2 eindringt. Die nach dem Aufsprühen feuchte Schicht geht nach dem Trocknen eine innige Verbindung mit der Trägerschicht 2 ein, insbesondere dann, wenn der Lack Bestandteile enthält, die die Oberfläche der Trägerschicht 2 anlösen.

Um noch dickere leitfähige Schichten 3 oder 4 auf der Trägerschicht 2 zu erhalten, kann die jeweilige leitfähige Schicht durch einen pinselartigen Applikator als Lack oder Paste auf die Trägerschicht 2 aufgetragen werden.

Insbesondere dann, wenn die leitfähige Schicht auf der Trägerschicht 2 maskiert werden soll, kann diese im Siebdruckverfahren aufgebracht werden; allerdings ist auch ein Aufbringen durch Aufsprühen oder durch Pastenauftrag oder mittels PVD- oder CVD-Verfahren unter Verwendung von Masken möglich.

In Figur 3 ist ein Querschnitt durch den Schichtaufbau eines Lenkrads dargestellt, in dem der kapazitive Flächensensor, wie er in Figur 1 und Figur 2 gezeigt ist, integriert ist.

Ein solches Lenkrad besitzt einen Lenkradkern 5, der durch einen Schaummantel 6 umschäumt ist. Auf dem Schaummantel 6 ist eine Heizungsschicht 7 aufgebracht und über eine Klebeschicht 11, zum Beispiel ein doppelseitiges Klebeband, an dem Schaummantel 6 verklebt. Auf der Außenseite der Heizungsschicht 7 befindet sich, ebenso über eine Klebeschicht 9 mit der Heizungsschicht 7 verbunden, der Flächensensor 1 mit der Trägerschicht 2 und den beiden die Trägerschicht 2 abdeckenden leitfähigen Schichten 3 und 4. Die äußere leitfähige Schicht 3 ist durch einen Lenkradbezug 10 abgedeckt, der mit dem Flächensensor 1 über eine weitere Klebeschicht 8 verklebt ist. Optional kann zwischen dem Flächensensor 1 und dem Bezug eine Kaschierschicht 12 zwischengefügt werden, die dazu dient, die Haptik des Lenkrads zu verbessern.

Der kapazitive Flächensensor 1 besitzt sehr flexible Eigenschaften aufgrund der verwendeten Materialien für die Trägerschicht 2 und die elektrisch leitfähigen Schichten 3, 4 und kann in einer sehr geringen Schichtdicke hergestellt werden.

Es ist darauf hinzuweisen, dass die Figuren, insbesondere die darin dargestellten Schichtdicken, nicht maßstabsgerecht sind.

In den Figuren 4 bis 6 sind verschiedene Heizungsschichten 7 gezeigt, wie sie in dem Schichtaufbau eines Lenkrads, der in Figur 3 dargestellt ist, oder auch in einem Fahrzeugsitz eingesetzt werden können.

In dem Aufbau, wie er in Figur 4 dargestellt ist, ist ein Heizdraht 13 zwischen einer unteren Schaumschicht 14 und einer oberen Schaumschicht 15 eingebettet. Die obere Schaumschicht 15 dient dazu, den Heizdraht 13 gegenüber der elektrisch leitfähigen Schicht 4 des kapazitiven Flächensensors 1 zu isolieren. Bevorzugt wird für diese Schicht 15 auch eine Folie aus Ethylen-Propylen-Dien-Kautschuk (EPDM) eingesetzt, die sich durch ihre elastischen und gut isolierenden Eigenschaften auszeichnet.

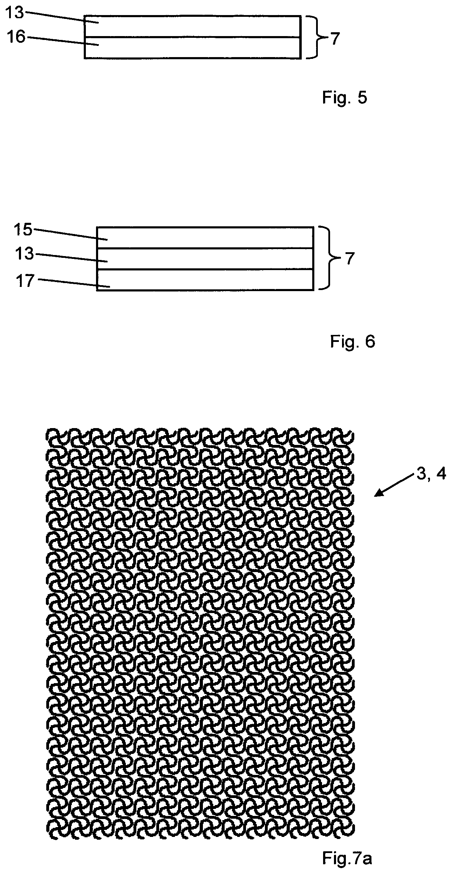

In einem alternativen Aufbau, wie er in Figur 5 gezeigt ist, kann die Heizungsschicht 7 auch nur einen Heizdraht 13, der auf ein Vlies 16 aufgebracht und auf seiner zu dem Flächensensor 1 hinweisenden Seite abgedeckt ist, umfassen.

Wie in Figur 6 gezeigt ist, kann die Schaumschicht 14, wie sie in der Heizungsschicht 7 der Figur 4 gezeigt ist, durch eine Vliesschicht 17 auf der zum Lenkradkern 5 hinweisenden Seite ersetzt werden.

Als Vliesschicht 16 oder 17, wie sie in den Figuren 5 und 6 dargestellt sind, wird beispielsweise ein Vlies aus Polyester verwendet mit einer bevorzugten Dicke im Bereich von 0,5 mm bis 1,5 mm.

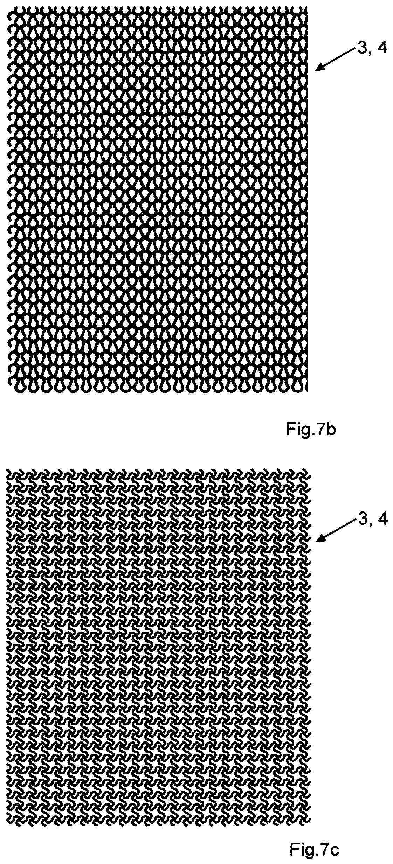

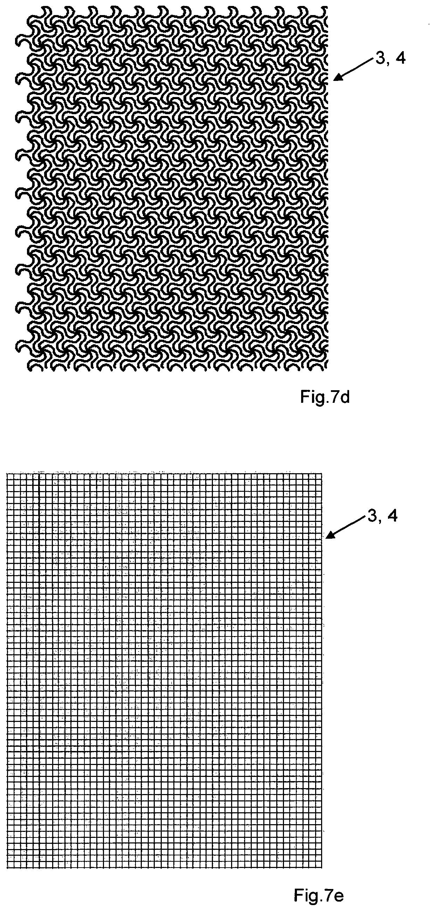

Die Figuren 7a bis 7e zeigen verschiedene Ausschnitte unterschiedlicher Strukturen für die elektrisch leitfähigen Schichten 3 und 4, die durch Verwendung von entsprechenden Masken auf die Trägerschicht 2 aufgebracht werden können. Es ist aber auch vorgesehen, dass eine der elektrisch leitfähigen Schichten 3 und 4 als eine Metallfolie mit einer Struktur, wie sie in den Figuren 7a bis 7e jeweils dargestellt sind, mit der Trägerschicht 2 verbunden wird.

Die Metallfolien, die insbesondere als Abschirmschicht auf der unteren Seite der Trägerschicht 2 dienen, können die Form von Mäandern, sternförmigen Strahlen, und dergleichen, insbesondere in Form von griechischen Mäandern oder griechischen Doppelmäandern, haben, so dass zusammenhängende und damit untereinander verbundene elektrisch leitende Strukturen verbleiben. Solche Muster zeigen ein sehr gutes Dehnverhalten und damit eine Nachgiebigkeit, die dem Dehnverhalten der Trägerschicht 2 folgen kann, so dass sie sich insbesondere den Gegebenheiten bei der Verwendung an einem Lenkrad, oder einem Sitz, gut anpassen.

Auch können die Metallfolien, die insbesondere als Abschirmschicht auf der unteren Seite der Trägerschicht 2 dienen, die Form eines Schachbretts haben, so dass zusammenhängende und damit untereinander verbundene elektrisch leitende Strukturen verbleiben.

## Patentansprüche

1. Kapazitiver Flächensensor (1) für einen Fahrzeugsitz oder ein Lenkrad mit mindestens einer elektrisch isolierenden Trägerschicht und jeweils einer jeder Seite der Trägerschicht zugeordneten elektrisch leitfähigen Schicht, **dadurch gekennzeichnet, dass** die Trägerschicht (2) eine dreidimensional verformbare Schicht ist und zumindest die eine elektrisch leitfähige Schicht (3; 4) mit der Trägerschicht (2) einen direkten Verbund bildet.

2. Kapazitiver Flächensensor nach Anspruch 1, **dadurch gekennzeichnet, dass** auf beiden Seiten der Trägerschicht (2) die jeweils elektrisch leitfähige Schicht (3; 4) mit der Trägerschicht (2) einen direkten Verbund bildet.

3. Kapazitiver Flächensensor nach Anspruch 1 oder 2, **dadurch gekennzeichnet, dass** die jeweilige leitfähige Schicht (3, 4) durch einen Lack gebildet ist.

4. Kapazitiver Flächensensor nach Anspruch 1 oder 2, **dadurch gekennzeichnet, dass** die jeweilige leitfähige Schicht (3, 4) durch eine Paste gebildet ist.

5. Kapazitiver Flächensensor nach Anspruch 1 oder 2, **dadurch gekennzeichnet, dass** die jeweilige leitfähige Schicht (3, 4) eine aufgedampfte Schicht ist.

6. Kapazitiver Flächensensor nach Anspruch 3, **dadurch gekennzeichnet, dass** die jeweilige leitfähige Schicht (3, 4) eine durch einen Sprühkopf aufgebrachte Schicht ist.

7. Kapazitiver Flächensensor nach Anspruch 3 oder 4, **dadurch gekennzeichnet, dass** die jeweilige leitfähige Schicht (3, 4) eine im Siebdruckverfahren aufgebrachte Schicht ist.

8. Kapazitiver Flächensensor nach einem der Ansprüche 1 bis 7, **dadurch gekennzeichnet, dass** die jeweilige leitfähige Schicht (3, 4) ein Edelmetall oder eine Edelmetalllegierung enthaltende Schicht ist.

9. Kapazitiver Flächensensor nach Anspruch 8, **dadurch gekennzeichnet, dass** die jeweilige leitfähige Schicht (3, 4) eine im Wesentlichen Silber enthaltende Schicht ist.

10. Kapazitiver Flächensensor nach einem der Ansprüche 1 bis 9, **dadurch gekennzeichnet, dass** die Trägerschicht (2) aus Ethylen-Propylen-Dien-(Monomer)-Kautschuk (EPDM) gebildet ist.

11. Kapazitiver Flächensensor nach einem der Ansprüche 1 bis 9, **dadurch gekennzeichnet, dass** die Trägerschicht (2) aus Polyolefin gebildet ist.

12. Kapazitiver Flächensensor nach einem der Ansprüche 1 bis 9, **dadurch gekennzeichnet, dass** die Trägerschicht (2) aus einem Schaumstoff, vorzugsweise aus einem Polyurethan-Schaumstoff, gebildet ist.

13. Kapazitiver Flächensensor nach einem der Ansprüche 1 bis 12, **dadurch gekennzeichnet, dass** die jeweilige elektrisch leitfähige Schicht (3, 4) eine Dicke von 1 nm bis 100 µm, vorzugsweise eine Dicke von 1 nm bis 50 µm, noch bevorzugter eine Dicke von 1 nm bis 20 µm, aufweist.

14. Kapazitiver Flächensensor nach einem der Ansprüche 1 bis 13, **dadurch gekennzeichnet, dass** die jeweilige elektrisch leitfähige Schicht (3, 4) einen kleineren Außenumfang als die Trägerschicht (2) aufweist.

15. Kapazitiver Flächensensor nach einem der Ansprüche 1 bis 14, **dadurch gekennzeichnet, dass** die eine elektrisch leitfähige Schicht (3, 4) in ihren Außenabmessungen kleiner ist als die andere elektrisch leitfähige Schicht (3, 4).
